# EUROPEAN PATENT SPECIFICATION

(11) **EP 2 228 288 B1**
(45) Date of publication and mention of the grant of the patent: **21.11.2018**
(21) Application number: 10154778.4
(22) Date of filing: 26.02.2010
(51) Int. Cl.: B62J 17/00

(54) **Cowling structure of saddle riding type vehicle**
Verkleidungsstruktur für ein Sattelfahrzeug
Structure de carter de véhicule de type à enfourcher

(30) Priority: 10.03.2009 JP 2009056464
(43) Date of publication of application: 15.09.2010
(73) Proprietor: Honda Motor Co., Ltd., Tokyo 107-8556 (JP)
(72) Inventor: Okada, Naoki, Saitama 351-0193 (JP); Seo, Satoshi, Saitama 351-0193 (JP); Fujii, Jun, Saitama 351-0193 (JP); Yano, Kengo, Saitama 351-0193 (JP); Nakamura, Fujio, Saitama 351-0193 (JP)
(74) Representative: Ilgart, Jean-Christophe

(56) References cited:
- EP-A1- 1 530 536
- JP-A- H07 285 481
- JP-A- 2008 100 611
- US-A1- 2006 254 844

## Description

### [Technical Field]

The present invention relates to a cowling structure of a saddle-riding type vehicle such as a motorcycle.

### [Background Art]

Conventionally, a saddle-riding type vehicle such as a motorcycle in which openings are provided in sides of a cowling has been well known. These openings are provided for such purposes as: regulating a flow of traveling wind, which is guided into the inside of the cowling, by allowing the traveling wind to escape from the cowling; and cooling a radiator and an engine that are provided inside the cowling. An example of a saddle-riding type vehicle provided with openings in a cowling is found in the description of Patent Document 1. Further examples of saddle-riding type vehicles provided with openings in a cowling are provided in JP 2008 100 611, US 2006/ 0254 844 and JP 072 85 481. JP 2008 100 611 shows the preamble of claim 1.

[Patent Document 1] Japanese Patent No. 3817659

### [Disclosure of the Invention]

### [Problems to be Solved by the Invention]

On the other hand, it is desired that the above conventional configuration should be improved to be able to regulate the wind flows effectively both inside and outside the cowling, and to have better external appearance at the same time.

Consequently, an object of the present invention is to allow a cowling structure of a saddle-riding type vehicle to regulate wind flows effectively both inside and outside the cowling, and to have better external appearance at the same time.

As means for solving the problem, the invention as recited in claim 1 is a cowling structure of a saddle-riding type vehicle (for instance, a motorcycle 1 in an example) including side cowls (for instance, side covers 95 in the example) covering sides of the vehicle,
wherein each of the side cowls is provided with a stepped portion (for instance, a groove portion 84 in the example) forming a downward face (for instance, a slope portion 84b in the example) which faces downward of a body of the vehicle,
characterized in that the downward face is provided with an air guide outlet (for instance, an air guide outlet 97 in the example) for guiding air inside the cowling to the outside of the cowling, and the stepped portion is provided with a turn signal lamp (for instance, an front turn signal lamp 41 in the example) jutting outward of the vehicle; and the air guide outlet is provided behind the turn signal lamp.

Note that the saddle-riding type vehicle mentioned here indicates a concept covering all the vehicles which passengers ride by straddling the vehicle bodies, and more specifically indicates a concept covering not only motorcycles (including motor-bicycles) but also three-wheeled vehicles (including those each having one front wheel and two rear wheels as well as those each having two front wheels and one rear wheel), four-wheeled vehicles, and even scooter-type vehicles each having a low-floor footrest portion.

The invention as recited in claim 2 is characterized in that the stepped portion is formed as a groove portion extending in a front-back direction of the vehicle.

The invention as recited in claim 3 is characterized in that the air guide outlet is formed long frontward and rearward along the downward face which extends in the front-back direction of the vehicle.

The invention as recited in claim 4 is characterized in that: the side cowl includes an upper side cowl (for instance, an upper side cover 72 in the example) and a lower side cowl (for instance, a lower side cover 73 in the example); and the stepped portion is provided between the upper side cowl and the lower side cowl.

The invention as recited in claim 5 is characterized in that: a lower edge portion (for instance, a lower edge portion 82c in the example) of the upper side cowl forms an upward curved concave shape, an upper edge portion (for instance, an upper edge portion 83c in the example) of the lower side cowl forms an upward curved convex shape, and the stepped portion is formed along these lower and upper edge portions; and the air guide outlet is formed to extend across, in the front-back direction of the vehicle, a top (for instance, denoted by reference sign t1 in the example) of the concave shape of the lower edge portion of the upper side cowl and a top (for instance, denoted by reference numeral t2 in the example) of the convex shape of the upper edge portion of the lower side cowl.

### [Effects of the Invention]

According to the invention as described in claim 1, the air guide outlet that lets air out from the inside of the cowling is provided on the downward face provided to the side cowl. This structure provides a sufficient ability to regulate the wind flows both inside and outside the cowling, and also has the external appearance improved by making the air guide outlet less visible (inconspicuous) from the outside of the vehicle, and a negative pressure generated behind the turn signal lamp while travelling makes it easier to let the air out from the cowling.

According to the invention as described in claim 2, air (travelling wind), which is guided through the air guide outlet to the outside of the cowling, flows, rearward of the vehicle along the groove portion extending in a front-back direction of the vehicle. This makes it possible to further enhance an effect of regulating the wind flows inside and outside the cowling.

According to the invention described in claim 3, a larger opening area can be secured for the air guide outlet without making the air guide outlet conspicuous.

According to the invention as described in claim 4, the stepped portion is provided to the connecting portions of the upper side cowl and the lower side cowl. This makes it possible to form the air guide outlet only by cutting out a peripheral edge of at least any one of the upper and lower side cowls, and accordingly to easily secure the strength for the upper and lower side cowls. Additionally, because the stepped portion is provided to the connecting portions of the upper side cowl and the lower side cowl, the external appearance can be enhanced with the connecting portion being made inconspicuous.

According to the invention as described in claim 5, the air guide outlet is provided to the concave connecting portion and the concave connecting portion in the side cowl, between which a gap is relatively likely to occur. This makes it possible to reduce the number of steps required for adjusting a gap between the connecting portions.

### [Brief Description of the Drawings]

FIG. 1 is a left side view of a motorcycle in an embodiment of the present invention.
FIG. 2 is a left side view of the motorcycle with a vehicle body cover thereof shown transparently.
FIG. 3 is a top view of the motorcycle.
FIG. 4 is a front view of the motorcycle.
FIG. 5 is an exploded side view of a left side cover of the motorcycle.
FIG. 6 is a side view of the neighborhood of a left front turn signal lamp of the motorcycle.
FIG. 7 is a cross-sectional view of the neighborhood thereof taken along the A-A line in FIG. 6.
FIG. 8 is a rear view of the neighborhood of a front cover of the motorcycle.
FIG. 9 is a cross-sectional view of the neighborhood thereof taken along the B-B line in FIG. 8.

### [Best Mode for Carrying out the Invention]

An embodiment of the present invention will be described below with reference to the accompanying drawings. Note that directions such as front, rear, left and right in the following description are the same as those of a vehicle unless otherwise stated. Additionally, an arrow indicated by "FR," an arrow indicated by "LH" and an arrow indicated by "UP" in the drawings indicate "frontward of a vehicle," "leftward of a vehicle" and "upward of a vehicle," respectively.

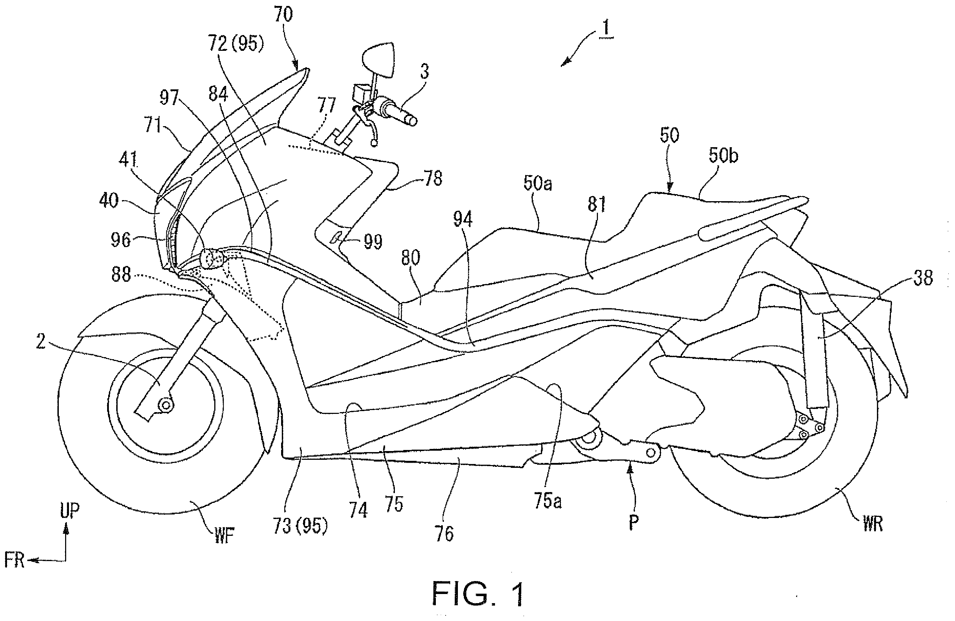

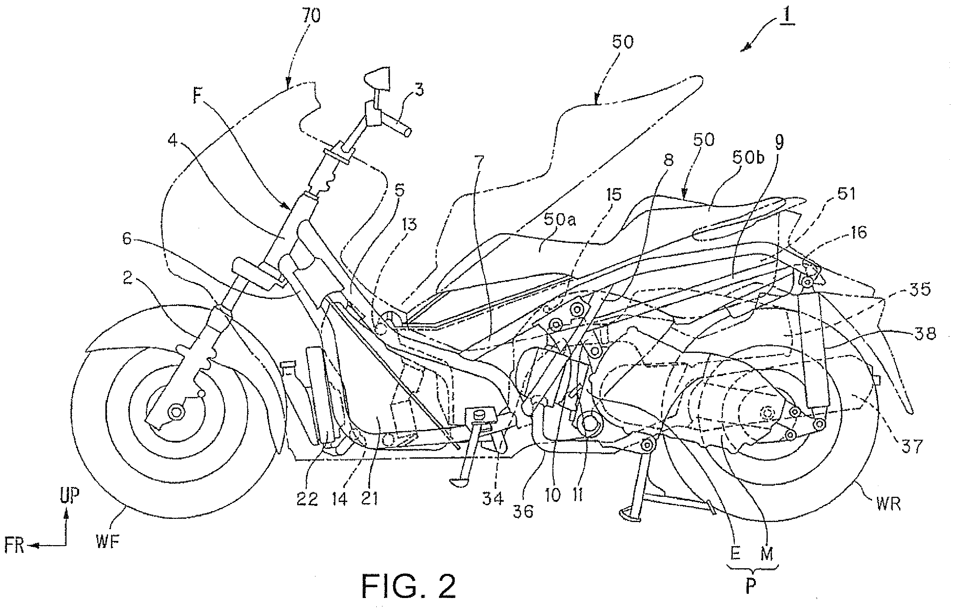

A scooter-type motorcycle (a saddle-riding type vehicle) 1 shown in FIGS. 1 and 2 includes: a front wheel WF steered by a bar handle 3; and a rear wheel WR driven by a swing unit (a swing power unit) P. Steering-related parts including the bar handle 3 and the front wheel WF are steerably and pivotally supported by a head pipe 4 located at a front end of a vehicle body frame F. A front end portion of the swing unit P is pivotally supported by the rear side of a lower portion of the vehicle body frame F in a way to be capable of swinging upward and downward. A straddled portion is formed between the bar handle 3 and a saddle-riding type seat 50 supported by an upside of a rear portion of the vehicle body, and provided for being seated by a passenger. The straddled portion is relatively low in vehicle height. Left and right floor steps 74, on which the passenger seated on the seat 50 puts the feet, are provided to the left and right sides of this straddled portion,

The vehicle body frame F includes, at the front end thereof, a front fork 2 supporting the front wheel WF; and the head pipe 4 connected to the front fork 2, and steerably supporting the bar handle 3. The front end portion of the swing unit P, which supports the rear wheel WR at a rear end thereof, is supported by pivot plates 10 of the vehicle body frame F through link members 11 in a way to be capable of swinging upward and downward. A rear cushion 38 is arranged between a rear end portion of the swing unit P and a rear end portion of the vehicle body frame F. Thereby, a unit-swing type rear suspension is formed in the rear-portion of the vehicle body.

The vehicle body frame F includes; the head pipe 4; paired left and right main frames 5 extending rearward from a vertically intermediate portion of the head pipe 4 in a rearward downward direction; and paired left and right down frames 6 extending rearward from a lower portion of the head pipe 4 in a rearward downward direction while being curved as appropriate. Rear end portions of the left and right down frames 5 are joined to rear end portions of the left and right main frames 5, respectively.

Additionally, the vehicle body frame F includes: paired left and right seat rails 7 extending rearward from rear portions of the left and right main frames 5 in a rearward upward direction; paired left and right support frames 8 extending rearward from the rear end portions of the left and right main frames 5 in a rearward upward direction, and supporting horizontally intermediate portions of the left and right seat rails 7; and rear support frames 9 extending rearward from rear portions of the left and right support frames 8 in a rearward upward direction, and supporting rear end portions of the left and right seat rails 7. The paired left and right pivot plates 10 are hung between the seat rails 7 and the support frames 8, respectively.

A fuel tank 21 is arranged in a space surrounded by the left and right main frames 5, as well as the left and right down frames 6. A first cross member 13 is hung between the left and right main frames 5 over the fuel tank 21. A second cross member 14 is hung between the left and right down frames 6 under the fuel tank 21. A third cross member 15 is hung between the left and right seat rails 7 over the swing unit P. A fourth cross member 16 is hung between the rear end portions of the left and right seat rails 7.

The swing unit P is formed by integrally including a water-cooling type engine E in a front portion thereof and a belt-type continuously variable transmission M in the left side of a rear portion thereof, the cylinder axis of the engine E being set substantially horizontal, the transmission M being configured to change an output of the engine E continuously variably, and to transmit the resultant output to the rear wheel WR. A throttle body 34 is connected to an upside of a cylinder head of the engine E, and an air cleaner box 35 is connected to a rearward side of the throttle body 34. Additionally, an exhaust pipe 36 is connected to a lower side of the cylinder head. The exhaust pipe 36 extends rearward while being curved as appropriate, and is connected to a silencer 37 arranged to the right side of the rear wheel WR.

A radiator 22 provided for cooling the ending E is arranged behind the front wheel 6, as well as concurrently in front of the down frames 6 and the fuel tank 21. Under the seat 50, an article storage box 51, in which personal belongings such as a helmet used by the passenger can be stored, is arranged between the left and right seat rails 7. The seat 50 integrally includes a front seat portion 50a on which a driver is to be seated, and a rear seat portion 50b on which a pillion passenger is to be seated. An opening in an upper portion of this article storage box 51 is opened and closed by causing this seat 50 to turn about the front end side thereof so that a rear portion thereof can be moved upward.

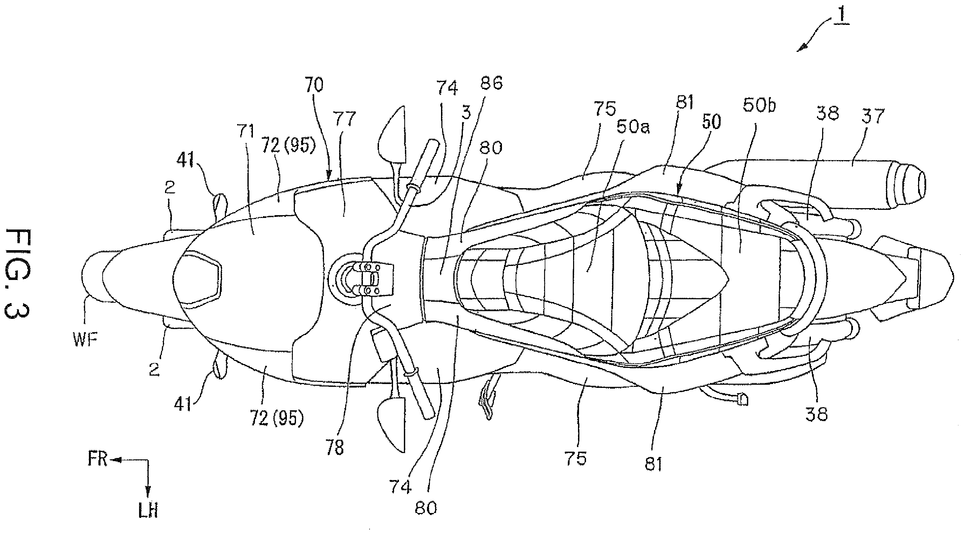

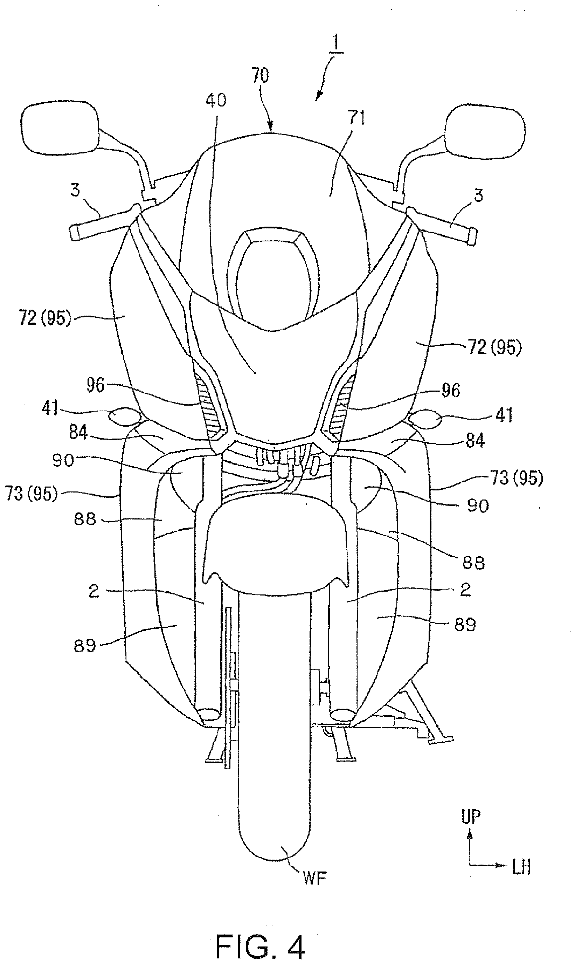

Referring to FIGS. 3 and 4 in combination, the surroundings of the vehicle body frame F are covered by a vehicle body cover 70 mainly made of synthetic resin. The vehicle body cover 70 includes: a front cover 71 covering the surroundings of the head pipe 4 (a front portion of the vehicle body) from a front of the vehicle; paired left and right upper side covers (side covers) 72 covering the surroundings of the head pipe 4 from sides of the vehicle, the paired left and right upper side covers 72 being connected to both of left and right sides of the front cover 71; paired left and right lower side covers (side covers) 73 covering the surroundings of the down frames 6 from the sides, the paired left and right lower front side covers 73 connected to lower portions of the upper side covers 72; left and right floor steps 74 connected to rearward sides of the upper front side covers 72 and the lower front side covers 73, the left and right floor steps 74 being those on which the driver seated on the front seat portion 50a puts the feet; paired left and right floor skirts 75 connected to lower sides outside the left and right floor steps 74; and an under cover 76 covering a lower side of the vehicle body. A head lump 40 is arranged on the front side in a lower portion of the front cover 71. Paired left and right tandem steps 75a, on which a pillion passenger seated on the rear seat portion 50b puts the feet, are provided in rear portions of the floor skirts 75.

The upper front side covers 72 and the lower front side covers 73 are respectively connected together integrally, thereby constituting paired left and right side covers 95. The left and right side covers 95 also serve as leg shields for covering the leg portions of the driver seated on the front seat portion 50a from the front. Paired left and right upper front lower covers (inner front covers) 88 as well as paired left and right lower front lower covers 89, which cover the surroundings of the radiator 22 from the front, are provided to the inward sides of the left and right side covers 95, respectively. The upper front lower covers 88 have vents 90, which are opened frontward of the vehicle in positions inward of the lower side covers 73 in a vehicle-width direction, respectively. Thus, air (travelling wind) having flown into the vents 90 is supplied to the radiator 22, and is used for such purposes as negative pressure correction in a riding space behind the front cover 71.

The vehicle body cover 70 further includes: a meter panel cover 77 covering the surroundings of the head pipe 4 from above; and an inner cover 78 covering the surroundings of the head pipe 4 from the rear, and coupled to the left and right upper side covers 72.

The vehicle body cover 70 further includes: paired left and right seat bottom covers 80 provided to lower sides of the front seat portion 50a; a seat hinge cover 86 provided between the left and right seat bottom covers 80; and paired left and right rear body covers 81 covering the rear portions of the vehicle body from the sides, and provided in a way to extend along the seat rails 7.

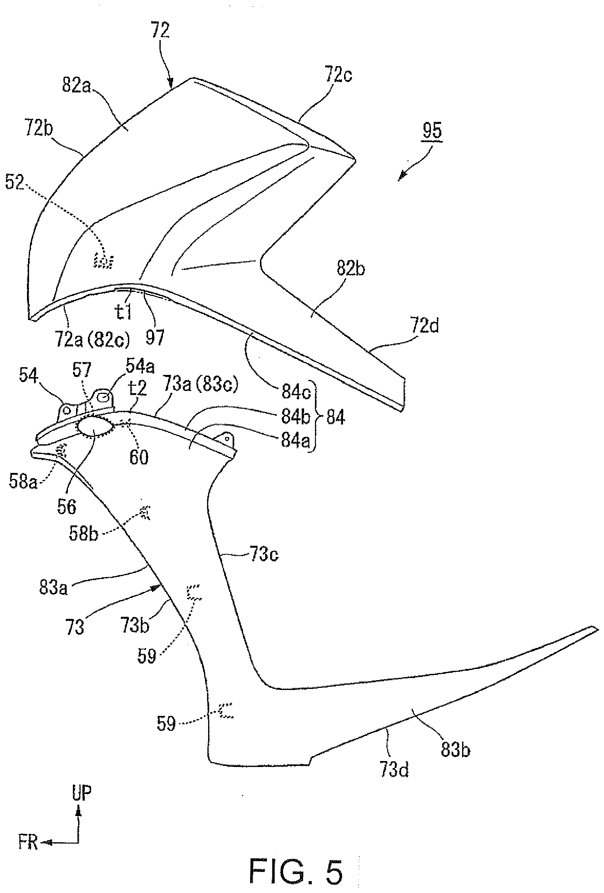

Referring to FIG. 5, each of the upper side covers 72 is formed by integrally including: an upper cover main body 82a continuing into a corresponding side of the front cover 71; and an upper extended portion 82b extending obliquely downward and rearward from a lower side in a rear portion of the upper cover main body 82a. A lower edge portion of the upper cover main body 82a and a lower edge portion of the upper extended portion 82b are continued into each other, and these portions constitute a lower edge portion 82c in the upper side cover 72, the lower edge portion 82c formed into a concave shape curved upward (an upward convex curved shape) in a side view. Note that reference numerals 72a, 72b, 72c, 72d, and t1 in the 'drawing indicate a lower side cover connecting portion connected to a corresponding one of the lower side covers 73, a front cover connecting portion connected to the front cover 71, a meter panel cover connecting portion connected to the meter panel cover 77, an inner cover connecting portion connected to corresponding one of the inner cover 78, and a top of the concave shape of the upper side cover 72 (the topmost portion, i.e., an upper end position of the lower edge portion 82c), respectively. On an inward side of the upper side cover 72, a convex portion 52 that engages with the lower side cover 73 is provided in the neighborhood of the lower side cover connecting portion 72a located along the lower edge portion 82c.

On the other hand, the lower side cover 73 is formed by integrally including: a lower cover main body 83a extending obliquely downward and rearward from a front half portion of the lower edge portion 82c of the upper side cover 72 while forming a steeper slope than the upper extended portion 82b; and a lower extended portion 83b extending rearward from a lower end portion of the lower cover main body 83a in a way to rise rearward along a corresponding one of the floor steps 74. An upper edge portion of the lower cover main body 83a constitutes an upper edge portion 83c that is fitted to the lower edge portion 82c of the upper side cover 72, the upper edge portion 82c formed into a convex shape curved upward (an upward convex curved shape) in the side view. Note that reference numerals 73a, 73b, 73c, 73d, and t2 in the drawing indicate an upper side cover connecting portion connected to the upper side covers 72, a front lower cover connecting portion connected to the corresponding upper front lower cover 88 and the corresponding lower front lower cover 89, a floor step connecting portion connected to the floor step 74, a floor skirt connecting portion 73d connected to the corresponding floor skirt 75, and a top of the convex shape of the lower side cover 73 (the topmost portion, i.e., an upper end position of the upper edge portion 83c), respectively. A connecting plate portion 54 is projectingly provided on the upper edge portion 83c of the lower side cover 73, and an engagement hole 54a, with which the convex portion 52 of the upper side cover 72 is engaged, is formed in this connecting plate portion 54.

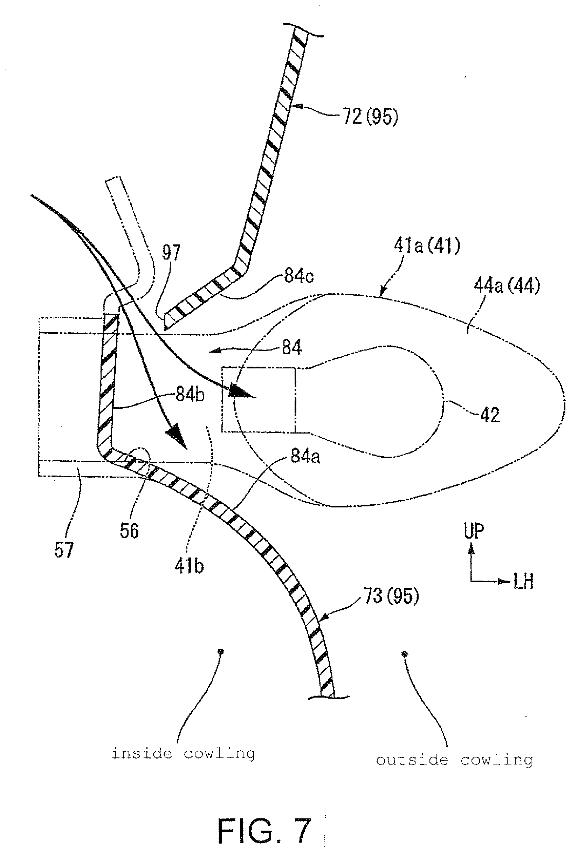

Referring to FIG. 7 in combination, in the upper edge portion 83c of the lower side cover 73, a flat upright wall portion 84b is formed to extend continuously from an obliquely upward and outward convex curved portion 84 in a position shifted inward in the vehicle-width direction. On the other hand, the lower edge portion 82c of the upper side cover 72 forms a downward-facing slope portion 84c by being bent obliquely downward and inward.

Here, a groove portion 84 extending along the lower and upper edge portions 82c and 83c in a front-back direction of the vehicle is formed in connecting portions of the upper and lower side covers 72 and 73. The groove portion 84 includes an inward side wall formed by the upright wall portion 84b, an upper wall formed by the slope portion 84c, and a lower wall formed by the curved portion 84a, and extends in the front-back direction of the vehicle while forming a concave shape (a cross-sectional shape like a Japanese katakana letter "ko"), which opens outward in the vehicle-width direction.

Referring to FIGS. 1 and 5, in the vehicle body cover 70, a groove 94 extending in the front-back direction of the vehicle is formed between an upper edge portion of the floor step 74 and lower edge portions respectively of the upper extended portion 82b of the upper side cover 72, the corresponding seat bottom cover 80 and the corresponding rear body covers 81. The groove 94 extends into the rear portion of the rear body cover 81 in a way to continue into a rearward side of the groove 84 in the side view. Thereby, the flow of part of wind flowing around the vehicle body cover 70 is regulated by passing through the groove portion 84 and the groove 94 when the motorcycle 1 is travelling.

Here, left and right front turn signal lamps 41 are provided to the respective upper edge portions 83c of the lower side covers 73 in a way to project outward in the vehicle-width direction, respectively.

Referring to FIG. 7 in combination, each of the front turn signal lamps 41 is formed by including: an oval turn signal lamp main body 41a that emits light by having a light source; and a shaft portion 41b supporting the inward side (the base end side) of the turn signal lamp main body 41a in the vehicle-width direction. The turn signal lamp main body 41a is formed by housing a bulb 42, as the light source, inside a light body 44 forming an external appearance of the turn signal lamp main body 41a. A front face of the light body 44 is formed as a turn signal lamp lens 44a covering the bulb 42 from the front.

An opening portion 56, through which the shaft portion 41a of the front turn signal lamp 41 is inserted, is formed in the upper edge portions 83c of each lower side cover 73 by cutting out parts of the corresponding upright wall portion 84b and the corresponding curved portion 84a. The opening portion 56 is located under the corresponding connecting plate portions 54, and is formed into an elliptical shape which is elongated frontward and rearward in the side view. A tubular holing portion 57 extending inward in the vehicle-width direction from an inner peripheral edge of the opening portion 56 is provided to the inward side of the opening portion 56 in the vehicle-width direction.

A shape (an inner circumferential shape) of the opening portion 56 in the side view is larger than a shape (an outer circumferential shape) of the shaft portion 41b of the front turn signal lamp 41 in the side view. Thereby, the shaft portion 41b is capable of being inserted through the opening portion 56. On the other hand, a shape (an outer circumferential shape) of the turn signal lamp main body 41a in the side view is larger than the shape of the opening portion 56 in the side view. Thereby, the opening portion 56 is almost hidden by the turn signal lamp main body 41a, and the front turn signal lamp 41 is attachable only from the outward side in the vehicle-width direction.

Referring to FIG. 5, each lower side cover 73 is provided with an upper fastening portion 58a for fastening an upper portion of the corresponding upper front lower cover 88 to the lower side cover 73 on the back face side (the inward side in the vehicle-width direction) of the lower side cover 73 in a position which is in the neighborhood of the upper edge portion 83c thereof, and which is obliquely downward and frontward from the opening portion 56. Additionally, each lower side cover 73 is provided with a lower fastening portion 58b for fastening a lower portion of the upper front lower cover 88 to the lower side cover 73 likewise on the back face side of an upper portion of the lower side cover 73 in a position obliquely downward and rearward of the opening portion 56. Each of the fastening portions 58a and 58b is shaped like a boss projecting inward in the vehicle-width direction, and an upper portion and a lower portion of the upper front lower cover 88 are fixedly joined to the fastening portions 58a and 58b through fastening means such as tapping screws, respectively. Note that each lower side cover 73 is provided with multiple fastening portions 59 for fastening the corresponding lower front lower cover 88 to the lower side cover 73 on the back face side of a lower portion of the lower side cover 73.

Additionally, each lower side cover 73 is provided with an upper end engaging portion 60 for engaging the rear side of an upper end portion of the upper front lower cover 88 with the lower side coves 73 on the back face side of the lower side cover 73 in a position which is in the neighborhood of the upper edge portion 83c, and which is rearward of the opening portion 56. The upper end engaging portion 60 is formed as a clip holding portion which projects inward in the vehicle-width direction and whose cross section is shaped, for example, like a letter H. The upper end portion of the upper front lower cover 88 is engaged with, and detachably joined to the upper end engaging portion 60 from the inward side in the vehicle-width direction through a clip.

An end portion of the inward side of the shaft portion 41b of the front turn signal lamp 41 is fixed to and supported by an upper end portion of the upper front lower cover 88 which is attached to the inward side of the lower side cover 73 in the vehicle-width direction. Thereby, the front turn signal lamp 41 is projectingly provided to the outward side of the upper edge portion 83c of the lower side cover 73 as described above.

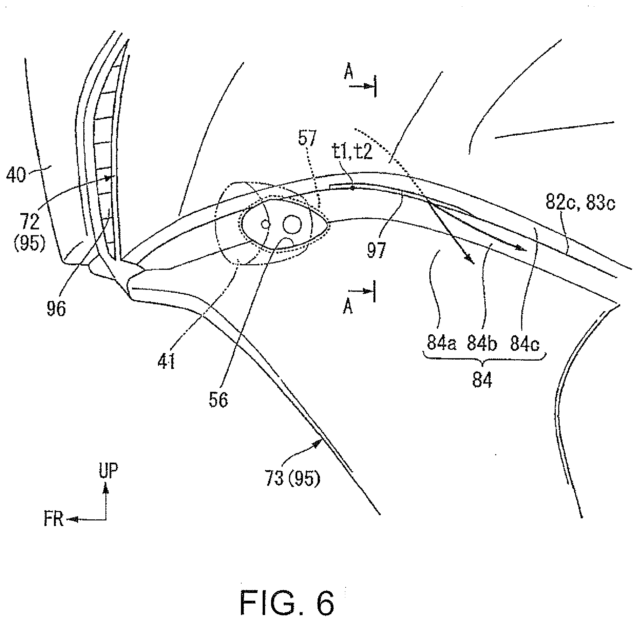

Here, referring to FIGS. 1, 4 and 6, paired left and right oblong air guide inlets 96, which are vertically elongated, are provided to a front end portion of the front cover 71 on the left and right sides of the head lump 40, respectively. Air guided into the inside of the cowling through the air guide inlets 96 is used mainly to correct the negative pressure in the riding space behind the front cover 71.

Then, referring to FIG. 7 in combination, paired left and right air guide outlets 97, which are elongated along the grooves 84 in the front-back direction, are provided to the rear of the front turn signal lamps 41 on the inward sides of upper portions of the respective grooves 84, respectively. The air guide outlets 97 are formed by cutting out parts of the front end sides of the respective slope portions 84c, respectively. The air guide outlets 97 are opened to upper faces (the slope portions 84c), which face downward, in the inward sides (the inner sides) of the grooves 84 in the vehicle-width direction, respectively. This makes the air guide outlets 97 less visible from the eye level outside the vehicle.

Part of the air guided into the inside of the cowling is guided toward the outside of the cowling through the air guide outlets 97, and a portion of this part of the air smoothly flows rearward of the vehicle along the groove portions 84 and the grooves 94. Additionally, part of the air guided into the inside of the cowling is favorably guided toward the outside of the cowling by the negative pressures produced behind the front turn signal lamps 41 when the motorcycle 1 is travelling.

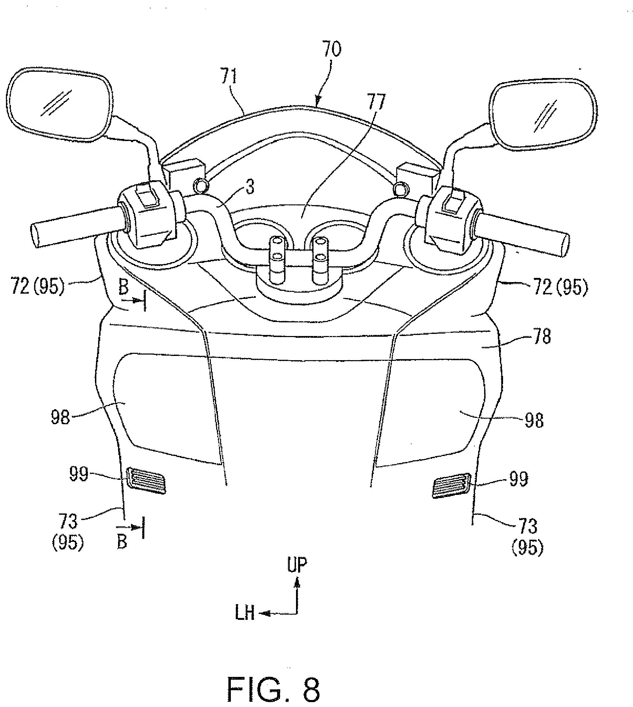

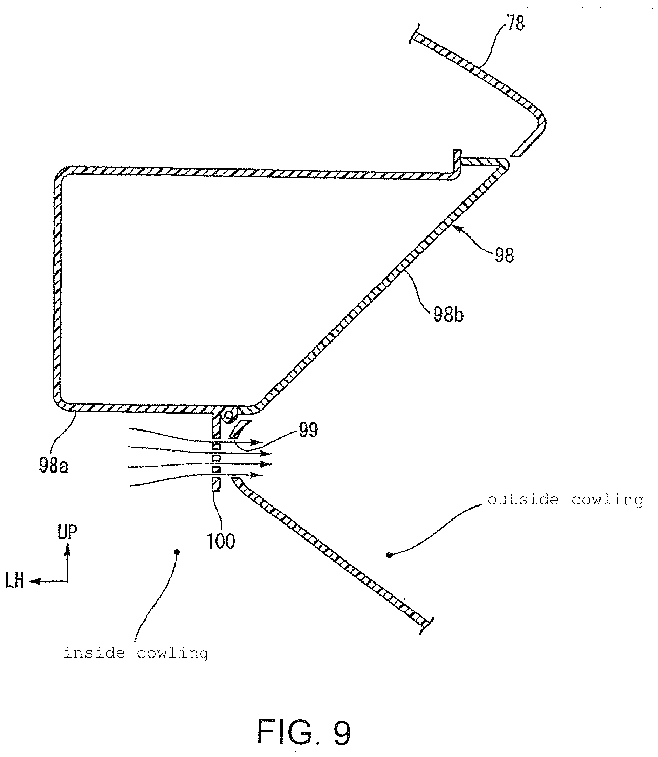

As shown in FIGS. 8 and 9, paired left and right article storage boxes 98 used mainly for storing small articles are provided to both of the left and right sides of the inner cover 78. Each article storage box 98 is formed by including: a box main body 98a intruding into the inward side of the inner cover 78; and a lid 98b which opens and closes an opening in a rear portion of the box main body 98a. In addition, paired left and right air guide outlets 99 for supplying the riding space behind the inner cover 78 with air residing in the inside of the cowling are provided to the inner cover 78 immediately under the left and right article storage boxes 98. Louver-forming portions 100 extending downward from lower faces of the box main bodies 98a are arranged right in front of the article storage boxes 98 (in the inward side of the cowling), respectively. Thus, the louver-forming portions 100 regulate a flow of air supplied to the riding space, and make the inside of the cowling less visible at the same time.

As has been described above, the cowling structure in the above described embodiment is configured to be applied to the saddle-riding type vehicle (the motorcycle 1) including the side covers 95 covering the respective sides of the vehicle. The side covers 95 include the groove portions 84, which form downward faces (the slope portions 84b) facing downward of the vehicle, respectively. The slope portions 84b include the respective air guide outlets 97 for guiding the air inside the cowling, toward the outside of the cowing.

According to this configuration, the air guide outlets that let air out from the inside of the cowling are provided on the downward faces provided to the side cowls. Thereby, the configuration makes it possible to regulate the flows of the travelling wind inside and outside the cowling, and to enhance the external appearance with the air guide outlets being made less visible (inconspicuous) from the outside of the vehicle.

Additionally, in the above cowling structure, the groove portions 84 are formed as grooves extending in the front-back direction of the vehicle; and the air (travelling wind) guided toward the outside of the cowling through the air guide outlets 97 thus flows rearward of the vehicle along the grooves 84 extending in the front-back direction of the vehicle. For this reason, the cowling structure makes it possible to further enhance the function of regulating the wind flows inside and outside the cowling.

Furthermore, in the above cowling structure, the air guide outlets 97 are formed long frontward and rearward along the slope portions 84b extending in the front-back direction of the vehicle. Thus, the above cowling structure makes it possible to ensure larger opening areas for the air guide outlets 97 without making the air guide outlets 97 conspicuous.

Moreover, in the above cowling structure, the front turn signal lamps 41 jutting outward and sideward of the vehicle are installed in the grooves 84, and the air guide outlets 97 are provided behind the front turn signal lamps 41. For this reason, the cowling structure makes the air guide outlets 97 more inconspicuous, and makes it easier to guide the air toward the outside of the cowling by use of the negative pressures which is produced behind the front turn signal lamps 41 while travelling.

Further, in the above cowling structure, the side covers 95 include the upper side covers 72 and the lower side covers 73, respectively; and the groove portions 84 are provided between the upper side covers 72 and the lower side covers 73, respectively; whereby: and the groove portions 84 are thus provided to the connecting portions of the upper side covers 72 and the lower side covers 73, respectively. Accordingly, the cowling structure makes it possible to form each of the air guide outlets 97 only by cutting out a peripheral edge of at least any one of the corresponding upper side cover 72 and the corresponding lower side cover 73, and to easily secure the strength for each of the upper side covers 72 and the lower side covers 73. In addition, because the groove portions 84 are respectively provided in the connecting portions of the upper side covers 72 and the lower side covers 73, the cowling structure makes it possible to make the connecting portions less conspicuous, and accordingly to enhance the external appearance.

Additionally, in the above cowling structure, the lower edge portions 82c of the respective upper side covers 72 form the upward curved concave shapes; the upper edge portions 83c of the respective lower side covers 73 form the upward curved convex shapes; the groove portions 84 are formed along these respective lower and upper portions 82c and 83c; and the air guide outlets 97 are formed to extend across the concave tops t1 of the lower edge portions 82c of the upper side covers 72 and the convex tops t2 of the upper edge portions 83c of the lower side covers 73 in the front-back direction of the vehicle, respectively. Thereby, each of the air guide outlets 97 is provided to the concave connecting portion and the convex connecting portion in the corresponding side cowl 95, between which a gap is relatively likely to occur. Thus, the cowling structure makes it possible to reduce the number of steps required for adjusting a gap between the connecting portions.

Note that the present invention is not limited by the above described embodiment. For example, the air guide outlets 97 may be formed by cutting out parts of the upper edge portions 83c of the lower side covers 73, respectively. Additionally, another configuration may be employed in which: instead of the groove portions 84, stepped portions having downward faces are formed in the side cowls; air guide outlets that let air out from a space inward of the cowling are thus provided on the downward faces.

In addition, a configuration in the above embodiment is one example of the present invention. It goes without saying that various modifications can be made thereto without departing from the scope of the present invention defined by the apended claims.

### [Explanation of the Reference Numerals]

- 1: motorcycle
- 41: front turn signal lamp (turn signal lamp)
- 72: upper side cover (upper side cowl)
- 73: lower side cover (lower side cowl)
- 82c: lower edge portion
- 83c: upper edge portion
- 84: groove portion (stepped portion)
- 84b: slope portion (downward face)
- 95: side cover (side cowl)
- 97: air guide outlet
- t1, t2: top

## Claims

1. A cowling structure of a saddle-riding type vehicle including side cowls (95) covering sides of the vehicle (1),
each of the side cowls (95) being provided with a stepped portion (84) forming a downward face (84c) which faces downward of a body of the vehicle (1), **characterized in that** the downward face (84c) is provided with an air guide outlet (97) for guiding air inside the cowling to the outside of the cowling, and the stepped portion (84) is provided with a turn signal lamp (41) jutting outward of the vehicle (1); and
the air guide outlet (97) is provided behind the turn signal lamp (41).

2. The cowling structure of a saddle-riding type vehicle according to claim 1, wherein:
the stepped portion (84) is formed as a groove portion (84) extending in a front-back direction of the vehicle (1).

3. The cowling structure of a saddle-riding type vehicle according to any one of claims 1 and 2, wherein:
the air guide outlet (97) is formed long frontward and rearward along the downward face (84c) which extends in the front-back direction of the vehicle (1),

4. The cowling structure of a saddle-riding type vehicle according to any one of claims 1 to 3, wherein:
the side cowl (95) includes an upper side cowl (72) and a lower side cowl (73); and
the stepped portion (84) is provided between the upper side cowl (72) and the lower side cowl (73).

5. The cowling structure of a saddle riding type vehicle according to claim 4, wherein:
a lower edge portion (82c) of the upper side cowl (72) forms an upward curved concave shape, an upper edge portion (83c) of the lower side cowl (73) forms an upward curved convex shape, and the stepped portion (84) is formed along these lower and upper edge portions (82c, 83c); and
the air guide outlet (97) is formed to extend across, in the front-back direction of the vehicle (1), a top of the concave shape of the lower edge portion (82c) of the upper side cowl and (72) a top of the convex shape of the upper edge portion (83c) of the lower side cowl (73).

## Patentansprüche

1. Verkleidungsstruktur für ein Fahrzeug des Sattelfahrtyps, die Seitenverkleidungen (95) umfasst, die Seiten des Fahrzeugs (1) bedecken,
wobei jede der Seitenverkleidungen (95) mit einem abgestuften Abschnitt (84) versehen ist, der eine abwärts gerichtete Fläche (84c) bildet, die von einer Karosserie des Fahrzeugs (1) nach unten zeigt, **dadurch gekennzeichnet, dass**
die abwärts gerichtete Fläche (84c) mit einem Luftführungsauslass (97) zum Führen von Luft innerhalb der Verkleidung zur Außenseite der Verkleidung versehen ist, und
der abgestufte Abschnitt (84) mit einer Blinkerlampe (41) versehen ist, die von dem Fahrzeug (1) auswärts vorsteht; und
der Luftführungsauslass (97) hinter der Blinkerlampe (41) bereitgestellt ist.

2. Verkleidungsstruktur für ein Fahrzeug des Sattelfahrtyps nach Anspruch 1, bei welcher
der abgestufte Abschnitt (84) als ein Rillenabschnitt (84) ausgebildet ist, der sich in der Vorne-hinten-Richtung des Fahrzeugs (1) erstreckt.

3. Verkleidungsstruktur für ein Fahrzeug des Sattelfahrtyps nach einem von Anspruch 1 und 2, bei welcher
der Luftführungsauslass (97) lange nach vorne und hinten entlang der abwärts gerichteten Fläche (84c) ausgebildet ist, die sich in der Vorne-hinten-Richtung des Fahrzeugs (1) erstreckt.

4. Verkleidungsstruktur für ein Fahrzeug des Sattelfahrtyps nach einem der Ansprüche 1 bis 3, bei der
die Seitenverkleidung (95) eine obere Seitenverkleidung (72) und eine untere Seitenverkleidung (73) umfasst; und
der abgestufte Abschnitt (84) zwischen der oberen Seitenverkleidung (72) und der unteren Seitenverkleidung (73) bereitgestellt ist.

5. Verkleidungsstruktur für ein Fahrzeug des Sattelfahrtyps nach Anspruch 4, bei der
ein unterer Kantenabschnitt (82c) der oberen Seitenverkleidung (72) eine aufwärts gekrümmte, konkave Form bildet, ein oberer Kantenabschnitt (83c) der unteren Seitenverkleidung (73) eine aufwärts gekrümmte, konvexe Form bildet, und der abgestufte Abschnitt (84) entlang dieses unteren und oberen Kantenabschnitts (82c, 83c) ausgebildet ist; und
der Luftführungsauslass (97) so ausgebildet ist, dass er sich in der Vorne-hinten-Richtung des Fahrzeugs (1) über eine Oberseite der konkaven Form des unteren Kantenabschnitts (82c) der oberen Seitenverkleidung (72) und eine Oberseite der konvexen Form des oberen Kantenabschnitts (83c) der unteren Seitenverkleidung (73) erstreckt.-

## Revendications

1. Structure de carter d'un véhicule de type à enfourcher incluant des carters latéraux (95) recouvrant les côtés du véhicule (1),
chacun des carters latéraux (95) étant doté d'une partie étagée (84) formant une face vers le bas (84c) qui fait face vers le bas d'un corps du véhicule (1),
**caractérisée en ce que** la face vers le bas (84c) est dotée d'une sortie d'un guide d'air (97) pour guider l'air à l'intérieur du carter vers l'extérieur du carter, et
la partie étagée (84) est dotée d'une lampe de clignotant (41) faisant saillie à l'extérieur du véhicule (1) ; et
la sortie du guide d'air (97) est fournie derrière la lampe de clignotant (41).

2. Structure de carter d'un véhicule de type à enfourcher selon la revendication 1, dans laquelle :
la partie étagée (84) est façonnée sous la forme d'une partie rainurée (84) s'étendant dans une direction avant-arrière du véhicule (1).

3. Structure de carter d'un véhicule de type à enfourcher selon l'une quelconque des revendications 1 et 2, dans laquelle :
la sortie du guide d'air (97) est de forme allongée vers l'avant et vers l'arrière le long de la face vers le bas (84c) qui s'étend dans la direction avant-arrière du véhicule (1).

4. Structure de carter d'un véhicule de type à enfourcher selon l'une quelconque des revendications 1 à 3, dans laquelle :
le carter latéral (95) inclut un carter latéral supérieur (72) et un carter latéral inférieur (73) ; et
la partie étagée (84) est fournie entre le carter latéral supérieur (72) et le carter latéral inférieur (73).

5. Structure de carter d'un véhicule de type à enfourcher selon la revendication 4, dans laquelle :
une partie de bord inférieur (82c) du carter latéral supérieur (72) a une forme concave incurvée vers le haut, une partie de bord supérieur (83c) du carter latéral inférieur (73) a une forme convexe incurvée vers le haut, et la partie étagée (84) est formée le long de ces parties de bords inférieur et supérieur (82c, 83c) ; et
la sortie du guide d'air (97) est formée pour s'étendre à travers, dans la direction avant-arrière du véhicule (1), un sommet de la forme concave de la partie de bord inférieur (82c) du carter latéral supérieur (72) et un sommet de la forme convexe de la partie de bord supérieur (83c) du carter latéral inférieur (73).
